# EUROPEAN PATENT SPECIFICATION

(11) **EP 4 432 254 B1**
(45) Date of publication and mention of the grant of the patent: **12.08.2026**
(21) Application number: 21966278.0
(22) Date of filing: 31.12.2021
(51) Int. Cl.: G06V 40/10, G06V 20/52, G06V 20/58, G06V 10/82, G06V 10/80

(54) **PEDESTRIAN MATCHING METHOD AND APPARATUS, ELECTRONIC DEVICE, AND COMPUTER-READABLE STORAGE MEDIUM**
FUSSGÄNGERABGLEICHSVERFAHREN UND -VORRICHTUNG, ELEKTRONISCHE VORRICHTUNG UND COMPUTERLESBARES SPEICHERMEDIUM
PROCÉDÉ ET APPAREIL D'APPARIEMENT DE PIÉTONS, DISPOSITIF ÉLECTRONIQUE ET SUPPORT DE STOCKAGE LISIBLE PAR ORDINATEUR

(30) Priority: 01.12.2021 CN 202111453596
(43) Date of publication of application: 18.09.2024
(73) Proprietor: Shenzhen Xumi Yuntu Space Technology Co., Ltd., Shenzhen, Guangdong 518054 (CN)
(72) Inventor: QI, Xiaoting, Shenzhen, Guangdong 518054 (CN); JIANG, Zhao, Shenzhen, Guangdong 518054 (CN); YANG, Zhanbo, Shenzhen, Guangdong 518054 (CN); HUANG, Zeyuan, Shenzhen, Guangdong 518054 (CN)
(74) Representative: Bayramoglu et al.
(86) International application number: PCT/CN2021/143571
(87) International publication number: WO 2023/097858

(56) References cited:
- CN-A- 109 740 541
- CN-A- 111 401 265
- CN-A- 112 200 020
- CN-A- 112 200 020
- CN-A- 113 239 784
- CN-A- 113 239 784
- CN-A- 113 657 355

## Description

### TECHNICAL FIELD

The present disclosure relates to the field of image processing technologies, and in particular, to a pedestrian matching method and apparatus, an electronic device, and a computer-readable storage medium.

### BACKGROUND

Image matching is a method for searching for similar image objects by analyzing similarity and consistency of corresponding relationships, such as contents, features, structures, relationships, textures, gray levels, or the like, of images. The image matching method can be used for pedestrian matching which may be done by performing comparison to determine whether pedestrians appearing in different images are the same pedestrian.

In most traditional pedestrian matching ways, matching is performed by directly using global features of a human body or according to local features of the human body; however, in practical situations, most images generally have uneven quality; for example, the human body in the image is shielded, postures of the human body are not uniform, and the images have uneven brightness, that is, have some abnormal points or outliers, such that feature alignment mismatching is prone to occur during pedestrian matching, resulting in a pedestrian matching result which is not accurate enough.

CN112200020A discloses a re-identification method and device, electronic equipment and a readable storage medium. The method comprises the steps of obtaining a pair of to-be-identified portrait pictures; obtaining a first-order feature of each portrait picture, wherein the first-order feature comprises a local feature of each key point in the portrait picture and a global feature of the portrait picture; acquiring relationship information of the portrait picture based on the first-order features of the portrait picture; acquiring human body topological information of each portrait picture based on the first-order feature and the relationship information of each portrait picture; and obtaining a pedestrian re-identification result based on the relationship information of each portrait picture and the human body topology information, wherein the pedestrian re-identification result comprises whether the pair of portrait pictures contains a same portrait. CN113239784A discloses a pedestrian re-recognition system and method based on spatial sequence feature learning. The pedestrian re-recognition system comprises a Res2Net network, a global feature module and a spatial sequence feature learning module. The global feature module comprises a flat pooling module and a full connection layer module; the Res2Net network is respectively connected with the global feature module and the spatial sequence feature learning module; the spatial sequence feature learning module comprises a convolutional layer, a random mask module, a maximum pooling module and a self-attention module. A spatial sequence feature learning module based on a self-attention mechanism is provided, spatial sequence features in the horizontal direction and the vertical direction are constructed, spatial semantic relation of the spatial sequence features is learned, and effective local features are extracted; a random batch feature erasing training strategy is put forward, and a local area of a feature map is shielded through a random mask block, so that the model is forced to learn suppressed low-frequency local features.

### SUMMARY

In view of this, embodiments of the present disclosure provide a pedestrian matching method and apparatus, an electronic device, and a computer-readable storage medium, so as to solve the problem in the prior art that a pedestrian matching result is not accurate enough due to some abnormal points or outliers in an image.

In a first aspect of the embodiments of the present disclosure, there is provided a pedestrian matching method, including:
acquiring a first image and a second image;
respectively extracting features of the first image and the second image to obtain a first local feature, a second local feature, a first high-order feature and a second high-order feature, the first local feature and the second local feature including local feature vectors corresponding to key points of a human body respectively, wherein the first local feature and the first high-order feature are extracted from the first image, and the second local feature and the second high-order feature are extracted from the second image;
performing feature alignment on the first local feature and the second local feature to obtain a first fused feature and a second fused feature;
performing feature alignment on the first high-order feature and the second high-order feature to obtain a first high-order fused feature and a second high-order fused feature; and
determining, on the basis of the first fused feature, the second fused feature, the first high-order fused feature and the second high-order fused feature, whether the first image and the second image include a same pedestrian.

The respectively extracting features of the first image and the second image to obtain a first local feature, a second local feature, a first high-order feature and a second high-order feature comprises:
respectively extracting local features of the human body of the first image and the second image to obtain the first local features and the second local features; and
performing feature aggregation on the first local features to obtain the first high-order feature, and performing feature aggregation on the second local features to obtain the second high-order feature;
wherein the performing feature alignment on the first local feature and the second local feature to obtain a first fused feature and a second fused feature comprises:
   calculating local feature similarity between the first local feature and the second local feature;
   determining a first matched feature of the second local feature in the first local feature according to the second local feature and the local feature similarity;
   determining a second matched feature of the first local feature in the second local feature according to the first local feature and the local feature similarity; and
   performing feature extraction on the first matched feature to obtain the first fused feature, and performing feature extraction on the second matched feature to obtain the second fused feature;
   wherein more than two key points of the human body are comprised;
   the performing feature aggregation on the local features to obtain the high-order features comprises:
      according to the local feature vector corresponding to each key point of the human body, learning and determining a first parameter, a second parameter and a third parameter corresponding to the local feature;
      generating a query, a key and a value corresponding to each local feature vector according to the first parameter, the second parameter and the third parameter;
      determining a weight coefficient between every two local feature vectors based on the query and the key;
      for any local feature vector, determining an adjusting coefficient according to a relationship between the local feature vector and each of other local feature vectors;
      obtaining an aggregation feature corresponding to the local feature according to the weight coefficient, the adjusting coefficient and the value; and
      determining the high-order features according to the aggregation features corresponding to the local features;
      the local features comprising the first local feature and the second local feature, and the high-order features comprising the first high-order feature and the second high-order feature;
      wherein the determining a first matched feature of the second local feature in the first local feature according to the second local feature and the local feature similarity comprises: calculating a first product of the local feature similarity and the second local feature; and determining a sum of the first product and the first local feature as the first matched feature;
      the determining a second matched feature of the first local feature in the second local feature according to the first local feature and the local feature similarity comprises: transposing the local feature similarity to obtain a transposed local feature similarity; calculating a second product of the transposed local feature similarity and the first local feature; and determining a sum of the second product and the second local feature as the second matched feature;
      wherein the performing feature alignment on the first high-order feature and the second high-order feature to obtain a first high-order fused feature and a second high-order fused feature comprises:
         calculating high-order feature similarity between the first high-order feature and the second high-order feature;
         determining a first high-order matched feature of the second high-order feature in the first high-order feature according to the second high-order feature and the high-order feature similarity;
         determining a second high-order matched feature of the first high-order feature in the second high-order feature according to the first high-order feature and the high-order feature similarity; and
         performing feature extraction on the first high-order matched feature to obtain the first high-order fused feature, and performing feature extraction on the second high-order matched feature to obtain the second high-order fused feature;
         wherein the determining, on the basis of the first fused feature, the second fused feature, the first high-order fused feature and the second high-order fused feature, whether the first image and the second image comprise a same pedestrian comprises:
            splicing the first fused feature and the first high-order fused feature to obtain a first spliced feature;
            splicing the second fused feature and the second high-order fused feature to obtain a second spliced feature; and
            calculating a contrastive loss value between the first spliced feature and the second spliced feature, and determining whether the first image and the second image comprise the same pedestrian according to the contrastive loss value

In a second aspect of the embodiments of the present disclosure, there is provided a pedestrian matching apparatus configured to implement the steps of the above method, including:
an acquiring module configured to acquire a first image and a second image;
a feature extracting module configured to respectively extract features of the first image and the second image to obtain a first local feature, a second local feature, a first high-order feature and a second high-order feature, the first local feature and the second local feature including local feature vectors corresponding to key points of a human body respectively;
a first feature aligning module configured to perform feature alignment on the first local feature and the second local feature to obtain a first fused feature and a second fused feature;
a second feature aligning module configured to perform feature alignment on the first high-order feature and the second high-order feature to obtain a first high-order fused feature and a second high-order fused feature; and
a matching module configured to determine, on the basis of the first fused feature, the second fused feature, the first high-order fused feature and the second high-order fused feature, whether the first image and the second image include a same pedestrian.

In a third aspect of the embodiments of the present disclosure, there is provided an electronic device, including a memory, a processor and a computer program stored in the memory and runnable on the processor, wherein the processor, when executing the computer program, implements the steps of the above method.

In a fourth aspect of the embodiments of the present disclosure, there is provided a computer-readable storage medium storing a computer program, wherein the computer program, when executed by a processor, implements the steps of the above method.

Compared with the prior art, the embodiments of the present disclosure have the following beneficial effects: the features of the acquired first and second images are extracted to obtain the local features and the high-order features corresponding to the key points of the human body in the two images, the features are described as the first local feature, the second local feature, the first high-order feature and the second high-order feature respectively, the feature alignment is performed on the first local feature and the second local feature to obtain the first fused feature and the second fused feature, the feature alignment is performed on the first high-order feature and the second high-order feature to obtain the first high-order fused feature and the second high-order fused feature, and whether the two images include the same pedestrian is determined based on the first fused feature, the second fused feature, the first high-order fused feature and the second high-order fused feature. By extracting the local features and the high-order features of the human body in the image and performing the feature alignment on the local features and the high-order features by adopting different feature alignment strategies, a relationship between the features is integrated, information between the features is comprehensively utilized, more effective features are obtained, an influence of the abnormal points or the outliers in the image on pedestrian matching is reduced, and a more accurate matching result is obtained.

### BRIEF DESCRIPTION OF THE DRAWINGS

In order to more clearly illustrate the technical solutions in the embodiments of the present disclosure, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic flowchart of a pedestrian matching method according to an embodiment of the present disclosure;
FIG. 2 is a schematic flowchart of determining, on the basis of a first fused feature, a second fused feature, a first high-order fused feature and a second high-order fused feature, whether a first image and a second image include a same pedestrian in the embodiment of the present disclosure;
FIG. 3 is a schematic flowchart of performing feature aggregation on local features to obtain high-order features in the embodiment of the present disclosure;
FIG. 4 is a schematic diagram of numbers of key points of a human body in the embodiment of the present disclosure;
FIG. 5 is a schematic flowchart of performing feature alignment on a first local feature and a second local feature to obtain the first fused feature and the second fused feature in the embodiment of the present disclosure;
FIG. 6 is a schematic flowchart of performing feature alignment on the first local feature and the second local feature in the embodiment of the present disclosure;
FIG. 7 is a schematic flowchart of performing feature alignment on a first high-order feature and a second high-order feature to obtain the first high-order fused feature and the second high-order fused feature in the embodiment of the present disclosure;
FIG. 8 is a schematic flowchart of performing feature alignment on the first high-order feature and the second high-order feature in the embodiment of the present disclosure;
FIG. 9 is a schematic flowchart of another pedestrian matching method according to an embodiment of the present disclosure;
FIG. 10 is a schematic structural diagram of a pedestrian matching apparatus according to an embodiment of the present disclosure;
FIG. 11 is a schematic structural diagram of another pedestrian matching apparatus according to an embodiment of the present disclosure; and
FIG. 12 is a schematic structural diagram of an electronic device according to an embodiment of the present disclosure.

### DETAILED DESCRIPTION OF THE EMBODIMENTS

In the following description, for the purpose of illustration instead of limitation, specific details such as a particular system structure and a technology are provided to make the embodiments of the present disclosure understood thoroughly. However, it should be understood by those skilled in the art that the present disclosure can also be implemented in other embodiments without the specific details. In other cases, detailed description of well-known systems, apparatuses, circuits and methods is omitted, so that the present disclosure is described without being impeded by unnecessary details.

A pedestrian matching method and apparatus according to embodiments of the present disclosure will be described in detail below with reference to the accompanying drawings.

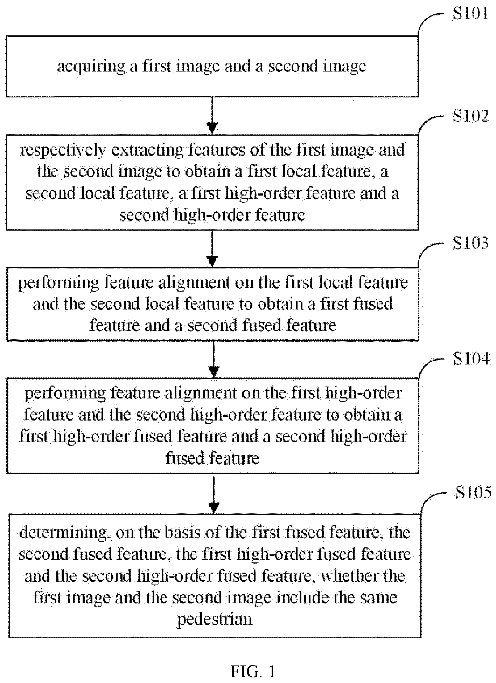

FIG. 1 is a schematic flowchart of a pedestrian matching method according to an embodiment of the present disclosure. As shown in FIG. 1, the pedestrian matching method includes:
S101: acquiring a first image and a second image.

The first image and the second image are used for pedestrian matching, and in the present embodiment, by comparing the first image and the second image, whether a same pedestrian is included therein is determined.

Specifically, the first image and the second image may be obtained from a database, or extracted from images collected by a monitoring device in real time. In an embodiment, when the pedestrian matching method is applied to a person staying scenario, the first image and the second image can be extracted from the images collected by the monitoring device, two images are extracted from the images collected by the monitoring device at a preset time interval to be compared, whether the same pedestrian is included is determined, and whether a person stays at a same place for a long time is determined. Further, in an embodiment, when a person is detected in the images collected by the monitoring device, the pedestrian matching method may be triggered, two images may be extracted at a preset time interval, and whether the person stays at the same position for a long time or not may be judged by pedestrian matching. In other embodiments, the pedestrian matching method may also be applied in other scenarios.

It should be noted that in the embodiments of the present application, the terms "first", "second", or the like, are used only for distinguishing different names, and do not mean any actual meanings.

S102: respectively extracting features of the first image and the second image to obtain a first local feature, a second local feature, a first high-order feature and a second high-order feature.

In order to enable a computer to "understand" the image, useful data or information is typically extracted from the image to obtain "non-image" representations or descriptions of the image, such as values, vectors, symbols, or the like. This process is called feature extraction, and the extracted "non-image" representations or descriptions are known as features. For images, each image has self features for distinguishing the image from other images, and some features are natural features which can be intuitively sensed, such as brightness, edges, textures, colors, or the like; some features are obtained by transformation or processing, such as moments, histograms, principal components, or the like.

In some embodiments, the feature extraction of the image may be implemented using a neural network. In the present embodiment, a purpose is pedestrian matching, and therefore, features of a human body included in the image are required to be extracted, and therefore, the feature extraction may be performed using a human body detection model or a human body key point estimation model.

Local features include local feature vector local features corresponding to the key points of the human body, and in the present embodiment, for distinction, the features extracted from the first image are described as the first local feature and the first high-order feature, and the features extracted from the second image are described as the second local feature and the second high-order feature.

In some embodiments, the respectively extracting features of the first image and the second image to obtain a first local feature, a second local feature, a first high-order feature and a second high-order feature includes: respectively extracting local features of the human body of the first image and the second image to obtain the first local features and the second local features; and performing feature aggregation on the first local features to obtain the first high-order feature, and performing feature aggregation on the second local features to obtain the second high-order feature.

In a specific embodiment, the extracting features of the first image to obtain a first local feature includes: inputting the first image into the human body detection model, and carrying out human body detection on the first image to obtain a human body detection box in the first image; and inputting the human body detection box into the human body key point estimation model to obtain features of the key points of the human body corresponding to the human body detection box, i.e., the first local features; it can be understood that a process of extracting the features of the second image to obtain the second local features is similar to the process of extracting the local features of the first image, and not repeated herein. Any human body detection model and any human body key point estimation model can be adopted to carry out the feature extraction on the image.

Further, in a specific embodiment, after the feature extraction is performed on the image by the human body detection model to obtain the human body detection box, the human body detection box is input to the human body key point estimation model, and a specific process of processing the input human body detection box by the human body key point estimation model includes: firstly, performing 1*1 convolution on each feature map to uniformly convert channels into 1,024, and then uniformly pooling a length and a width of the feature map into [16, 8] by ROIAlign (calibration), so as to obtain a dimension [1,024, 16, 8] of each human body feature map G1 at this point. G1 is subjected to three convolution blocks (conv(3, 3), BN, relu) to obtain feature maps [1,024, 16, 8], [512, 16, 8], [256, 16, 8] in sequence. Finally, a thermodynamic diagram of all the key points of the human body is obtained after conv(1, 1), BN and relu, and when 14 key points of the human body exist, the thermodynamic diagram can be represented as [14, 16, 8]. Input of each layer is subjected to batch normalization (BN). The relu (rectified linear unit) is an activation function commonly used in an artificial neural network, and generally refers to a nonlinear function represented by a ramp function and variations thereof.

The dimension of a thermodynamic diagram of each key point is [1, 16, 8], and then, repeat stacking is carried out to change the dimension into [1,024, 16, 8], the dimension is multiplied by the feature map G1 [1,024, 16, 8] of the human body to obtain a feature map [2,048, 16, 8] of the key point, and finally, global average pooling is carried out to obtain a feature vector [1,024] of the key point. Similarly, the feature vector of each key point of the human body can be obtained using the above method, each key point of the human body in the first image is the first local feature, and each key point of the human body in the second image is the second local feature.

**In** some embodiments, after the local features are obtained, the high-order features may be obtained by aggregating the local features; similarly, in the present embodiment, the high-order feature obtained by aggregating the first local features is described as the first high-order feature, and the high-order feature obtained by aggregating the second local features is described as the second high-order feature. Specifically, a specific process of aggregating the local features to obtain the high-order features will be described in detail in the following embodiments, and is not repeated herein.

S103: performing feature alignment on the first local feature and the second local feature to obtain a first fused feature and a second fused feature.

The pedestrian appearing in different images has different postures at different moments, and when pedestrian matching is performed on different images, same-name points in the two images can be searched by aligning image features, so as to determine whether the same pedestrian is included in the images. **In** the present embodiment, the feature alignment is performed on the local features of the human body extracted from the two images, and the features obtained by the alignment are described as the first fused feature and the second fused feature. Specifically, steps of the performing feature alignment on the first local feature and the second local feature to obtain a first fused feature and a second fused feature will be described in detail in the following embodiments.

S104: performing feature alignment on the first high-order feature and the second high-order feature to obtain a first high-order fused feature and a second high-order fused feature.

**In** the present embodiment, during feature extraction, the low-order local features of the human body are extracted, and the high-order features of the image are obtained by the low-order local features of the human body, such that during feature alignment, low-order feature alignment is performed on the low-order local features, a high-order feature alignment strategy is adopted for the high-order features, the collected image features are fully utilized, and therefore, the extracted features have a better performance. Further, in the present embodiment, the features obtained by aligning the high-order features are described as the first high-order fused feature and the second high-order fused feature.

S105: determining, on the basis of the first fused feature, the second fused feature, the first high-order fused feature and the second high-order fused feature, whether the first image and the second image include the same pedestrian.

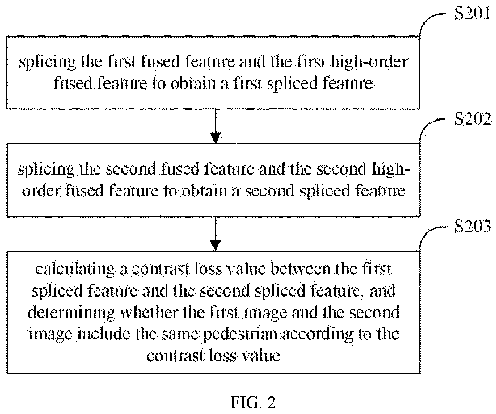

In an embodiment, as shown in FIG. 2, the determining, on the basis of the first fused feature, the second fused feature, the first high-order fused feature and the second high-order fused feature, whether the first image and the second image include the same pedestrian includes:
S201: splicing the first fused feature and the first high-order fused feature to obtain a first spliced feature.

S202: splicing the second fused feature and the second high-order fused feature to obtain a second spliced feature.

In some embodiments, feature splicing may be accomplished using a concat function for j oining two or more arrays. In the present embodiment, the feature obtained by splicing the first fused feature and the first high-order fused feature is described as the first spliced feature, and the feature obtained by splicing the second fused feature and the second high-order fused feature is described as the second spliced feature. In other embodiments, feature splicing may be implemented in other ways.

S203: calculating a contrastive loss value between the first spliced feature and the second spliced feature, and determining whether the first image and the second image include the same pedestrian according to the contrastive loss value.

In some embodiments, the contrastive loss value between the first spliced feature and the second spliced feature is calculated by a contrastive loss function; the contrastive loss function can well express a matching degree between paired samples, and in the present embodiment, the contrastive loss function is used to calculate the contrastive loss value for the first spliced feature and the second spliced feature, and the contrastive loss value can be used to describe the matching degree between the first image and the second image. Specifically, in the present embodiment, any contrastive loss function may be used to calculate the contrastive loss value between the two spliced features.

After the contrastive loss value is obtained, whether the first image and the second image include the same pedestrian can be determined according to the contrastive loss value. In an embodiment, when whether the first image and the second image include the same pedestrian is determined according to the contrastive loss value, a preset condition may be set, and the first image and the second image can be determined to include the same pedestrian when the contrastive loss value meets the preset condition; the preset condition can be set according to actual conditions, and the higher the matching degree between the first image and the second image determined according to the contrastive loss value is, the more likely the first image and the second image include the same pedestrian.

In other embodiments, after the first spliced feature and the second spliced feature are obtained, whether the first image and the second image include the same pedestrian may be determined in other manners according to the first spliced feature and the second spliced feature; for example, similarity between the first spliced feature and the second spliced feature is calculated, and whether the first image and the second image include the same pedestrian is determined according to the similarity.

According to the technical solution of the embodiments of the present disclosure, the features of the acquired first and second images are extracted to obtain the local features and the high-order features corresponding to the key points of the human body in the two images, the features are described as the first local feature, the second local feature, the first high-order feature and the second high-order feature respectively, the feature alignment is performed on the first local feature and the second local feature to obtain the first fused feature and the second fused feature, the feature alignment is performed on the first high-order feature and the second high-order feature to obtain the first high-order fused feature and the second high-order fused feature, and whether the two images include the same pedestrian is determined based on the first fused feature, the second fused feature, the first high-order fused feature and the second high-order fused feature. By extracting the local features and the high-order features of the human body in the image and performing the feature alignment on the local features and the high-order features by adopting different feature alignment strategies, a relationship between the features is integrated, information between the features is comprehensively utilized, more effective features are obtained, an influence of the abnormal points or the outliers in the image on pedestrian matching is reduced, and a more accurate matching result is obtained.

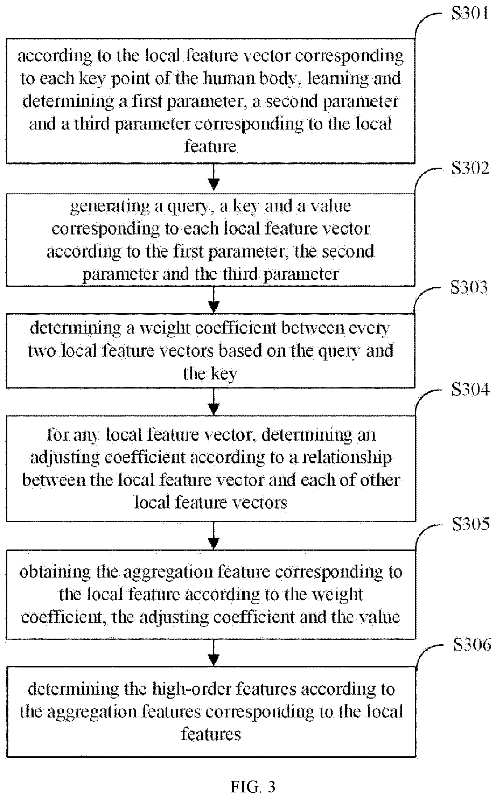

In some embodiments, more than two key points of the human body are included; in the present embodiment, as shown in FIG. 3, the aggregating the local features to obtain the high-order features includes steps S301 to S306, the local features include the first local feature and the second local feature, and the high-order features include the first high-order feature and the second high-order feature.

S301: according to the local feature vector corresponding to each key point of the human body, learning and determining a first parameter, a second parameter and a third parameter corresponding to the local feature.

A number of the key points of the human body is usually more than two, and when the local features of the human body are extracted, the local feature vector corresponding to each key point of the human body can be obtained, and a number of the local feature vectors included in the local features corresponds to the number of the key points of the human body. The local features in the present embodiment include the first and second local features extracted from the first and second images respectively.

Specifically, learning of the first parameter, the second parameter, and the third parameter corresponding to the local feature according to the local feature vector corresponding to each key point of the human body may be implemented in any manner, for example, by a neural network; in an embodiment, the learning may be implemented by a Transformer network (proposed by Ashish Vaswani). In some embodiments, the first parameter, the second parameter, and the third parameter corresponding to the local vector have a range of R^{1024×256}.

S302: generating a query, a key and a value corresponding to each local feature vector according to the first parameter, the second parameter and the third parameter.

The query, the key and the value are concepts in the Transformer network. Generation of the query, the key and the value corresponding to each local feature vector according to the first parameter, the second parameter and the third parameter may be represented as:
query: Qᵢ = fᵢ * W_{q}, wherein W_{q} denotes the first parameter;
key: Kᵢ = fᵢ * Wₖ, wherein Wₖ denotes the second parameter;
value: Vᵢ = fᵢ * Wᵥ, wherein Wᵥ denotes the third parameter.

S303: determining a weight coefficient between every two local feature vectors based on the query and the key.

In some embodiments, the determining a weight coefficient between every two local feature vectors based on the query and the key includes: selecting two local feature vectors as a first target local feature vector and a second target local feature vector, and calculating a weight coefficient between the first target local feature vector and the second target local feature vector by using the query of the first target local feature vector and the key of the second target local feature vector.

Further, in a specific embodiment, the calculating a weight coefficient between the first target local feature vector and the second target local feature vector by using the query of the first target local feature vector and the key of the second target local feature vector can be represented as: ${a}_{ij} = softmax \left(\frac{{Q}_{i} {K}_{j}^{T}}{\sqrt{256}}\right)$ wherein aᵢⱼ denotes a weight coefficient between the local feature vectors with numbers i and j; i and j represent the numbers corresponding to the key points of the human body respectively, and the key points of the human body can be numbered in advance; Qᵢ represents the query corresponding to the first target local feature vector, Kⱼ represents the key of the second target local feature vector, ${K}_{j}^{T}$ represents transposition of Kⱼ, 256 is the dimension of Qᵢ, Kⱼ, softmax() represents a logistic regression algorithm, and aᵢⱼ represents the weight coefficient between the first target local feature vector and the second target local feature vector. The transposition is defined as follows: all elements of A are subjected to mirror inversion around a half line which starts from the element in a 1st line and a 1st column and extends in a lower right direction at an angle of 45 degrees, and the transposition of A is obtained.

Using the method, the weight coefficient between the local feature vectors corresponding to every two key points of the human body can be calculated.

S304: for any local feature vector, determining an adjusting coefficient according to a relationship between the local feature vector and each of other local feature vectors.

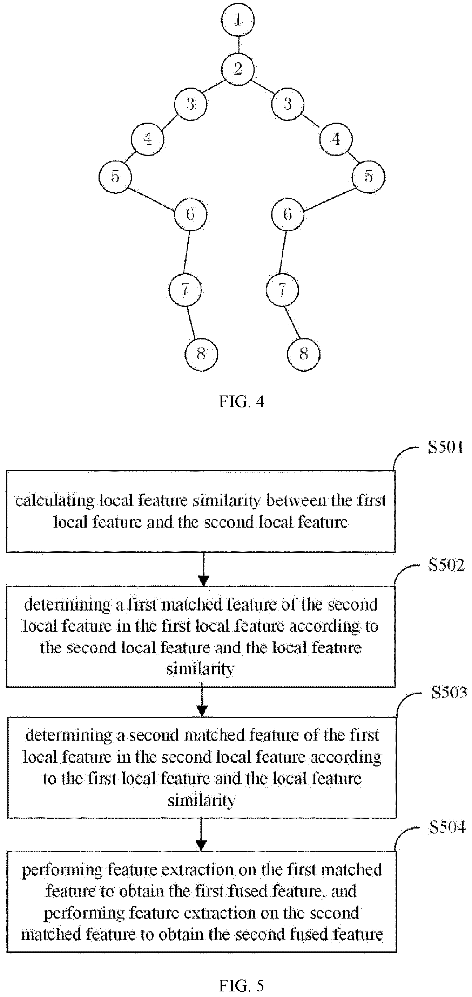

The relationship between the local feature vector and other local feature vectors can be determined by the numbers preset for the key points of the human body. In a specific embodiment, each key point of the human body is assigned with a number, and as shown in FIG. 4: human head=1; neck=2; left shoulder=right shoulder=3; left elbow=right elbow=4; left hand=right hand=5; left hip=right hip=6; left knee=right knee=7; left foot=right foot=8. Since the closer key points of the human body have a larger influence during pedestrian matching, in the present embodiment, the adjusting coefficient is set to perform aggregation to obtain the high-order feature according to a degree of the influence between the key points.

In a specific embodiment, the determining an adjusting coefficient according to a relationship between the local feature vector and other local feature vectors may be represented as: $p = \frac{r}{max \left\{1, \left(i-j\right)\right\}}$ wherein p represents the adjusting coefficient, r is a hyper-parameter, a value of the hyper-parameter can be defined according to actual situations, and i and j represent the numbers of the key points respectively.

S305: obtaining the aggregation feature corresponding to the local feature according to the weight coefficient, the adjusting coefficient and the value.

In some embodiments, the obtaining the aggregation feature corresponding to the local feature according to the weight coefficient, the adjusting coefficient and the value may be represented as: ${f}_{i}^{at} = {\sum }_{j = 1}^{14} {a}_{ij} ∗ {V}_{j} ∗ p$ wherein ${f}_{i}^{at}$ represents the aggregation feature corresponding to the local feature vector with the number i, aᵢⱼ represents the weight coefficient between the local feature vectors with the numbers i and j, p represents the adjusting coefficient, Vⱼ represents the value corresponding to the local feature vector with the number j, i and j represent the numbers of the key points respectively, and 14 represents the number of the local feature vectors (the key points of the human body).

S306: determining the high-order features according to the aggregation features corresponding to the local features.

In the step S305, the aggregation feature corresponding to each key point of the human body (local feature vector) may be obtained, and the aggregation features are combined together to obtain the corresponding high-order feature. In the present embodiment, the first local features are aggregated to obtain the first high-order feature, and the second local features are aggregated to obtain the second high-order feature.

Further, the above process of obtaining the high-order feature by aggregating the local features may be implemented by a transformer module.

According to the technical solution of the embodiments of the present disclosure, the first parameters, the second parameters and the third parameters corresponding to the first local feature and the second local feature are learnt using the transformer model, the queries, the keys and the values of the local feature vectors are calculated according to the first parameters, the second parameters and the third parameters, the weight coefficient between every two local feature vectors is calculated according to the queries and the keys corresponding to the local feature vectors, the adjusting coefficient is determined according to the relationship between every two local feature vectors, aggregation is performed to obtain new local features according to the weight coefficients, the values corresponding to the local feature vectors and the adjusting coefficients, and finally, the fused features are obtained by aggregating the local features. In the present embodiment, the adjusting coefficient is designed based on the relationship between the local feature vectors, i.e., a prior topological structure relationship of the key points of the human body, and the degree of the influence between the local feature vectors is added into feature aggregation using the adjusting coefficient, such that the high-order features obtained by aggregation are better.

**In** some embodiments, as shown in FIG. 5, the performing feature alignment on the first local feature and the second local feature to obtain a first fused feature and a second fused feature includes steps S501 to S504:
S501: calculating local feature similarity between the first local feature and the second local feature.

The similarity between the local features may be calculated in any manner. **In an** embodiment, the first local feature and the second local feature are mapped to a same feature space, and a cosine distance between the two local features is calculated as the feature similarity between the two local features. Further, the first local feature and the second local feature may be mapped to the same feature space by normalizing distribution of the first local feature and the second local feature. **In** a specific embodiment, the mapping of the first local feature and the second local feature to the same feature space and the calculation of the cosine distance between the two local features as the feature similarity between the two local features may be represented as: $M 1 = normalize \left({F}_{p}\right) ∗ {\left[normalize\left({F}_{g}\right)\right]}^{T}$ wherein Fp denotes the first local feature, Fg denotes the second local feature, normalize() denotes normalization of the local features, and M1 denotes the similarity between the first local feature Fp and the second local feature Fg.

In other embodiments, the calculation of the local feature similarity between the first local feature and the second local feature may be implemented in other ways.

S502: determining a first matched feature of the second local feature in the first local feature according to the second local feature and the local feature similarity.

In some embodiments, the determining a first matched feature of the second local feature in the first local feature according to the second local feature and the local feature similarity includes: calculating a first product of the local feature similarity and the second local feature; and determining a sum of the first product and the first local feature as the first matched feature.

The calculated first product of the local feature similarity and the second local feature represents points which are contained in the first local feature and matched with the second local feature, and mainly used points in the first local feature can be determined according to the matched points, thereby eliminating outliers or occlusion points.

The calculated sum of the first product and the first local feature includes both original features in the first local feature and a relationship between the first local feature and the second local feature; in the present embodiment, the sum is described as the first matched feature, and the points in the first image required to be matched with the second image may be determined according to the first matched feature.

In a specific embodiment, the calculating a first product of the local feature similarity and the second local feature may be represented as: ${F}_{g}^{1} = M 1 ∗ {F}_{g}$
wherein ${F}_{g}^{1}$ denotes the first product, M1 denotes the local feature similarity, and Fg represents the second local feature.

The determining a sum of the first product and the first local feature as the first matched feature is represented as: ${F}_{p}^{2} = {F}_{p} + {F}_{g}^{1}$
wherein ${F}_{p}^{2}$ denotes the first matched feature, and Fp represents the first local feature.

S503: determining a second matched feature of the first local feature in the second local feature according to the first local feature and the local feature similarity.

Similarly to the determination of the first matched feature, the second matched feature may be determined according to the first local feature and the local feature similarity. In contrast, in the present embodiment, the local feature similarity is transposed first, and the second matched feature is determined by using the transposed local feature similarity.

In some embodiments, the determining a second matched feature of the first local feature in the second local feature according to the first local feature and the local feature similarity includes: transposing the local feature similarity to obtain a transposed local feature similarity; calculating a second product of the transposed local feature similarity and the first local feature; and determining a sum of the second product and the second local feature as the second matched feature.

The calculated second product of the transposed local feature similarity and the first local feature represents points which are contained in the second local feature and matched with the first local feature, and mainly used points in the second local feature can be determined according to the matched points, thereby eliminating outliers or occlusion points.

The calculated sum of the second product and the second local feature includes both original features in the first local feature and a relationship between the first local feature and the second local feature; in the present embodiment, the sum is described as the second matched feature, and the points in the second image required to be matched and mismatched with the first image may be determined according to the second matched feature.

In a specific embodiment, the calculating a second product of the transposed local feature similarity and the first local feature may be represented as: ${F}_{p}^{1} = {M}_{1}^{T} ∗ {F}_{p}$
wherein ${F}_{p}^{1}$ denotes the second product, ${M}_{1}^{T}$ denotes the transposed local feature similarity, and Fp represents the first local feature.

The determining a sum of the second product and the second local feature as the second matched feature is represented as: ${F}_{g}^{2} = {F}_{g} + {F}_{p}^{1}$
wherein ${F}_{g}^{2}$ denotes the second matched feature, and Fg represents the second local feature.

S504: performing feature extraction on the first matched feature to obtain the first fused feature, and performing feature extraction on the second matched feature to obtain the second fused feature.

After the first matched feature and the second matched feature are obtained, feature extraction is carried out to obtain new fused features after the alignment of the low-order features, i.e., the first fused feature and the second fused feature.

In some embodiments, the feature extraction performed on the input matched features may be implemented by fc+relu. An fc layer is a fully-connected layer, and each node of the fully-connected layer is connected with all nodes of a previous layer and used for integrating the extracted features. An relu layer typically consists of an activation function. The matched features include the first matched feature and the second matched feature.

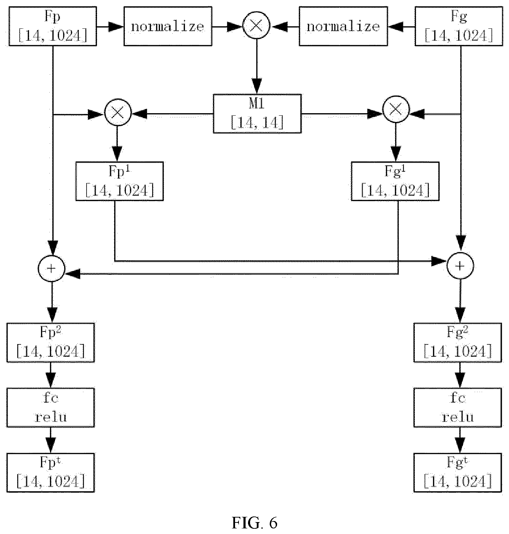

**In** a specific embodiment, as shown in FIG. 6 which is a flowchart of the step of performing feature alignment on the first local feature and the second local feature, Fp represents the first local feature and Fg represents the second local feature; ${F}_{p}^{t}$ represents the first fused feature and ${F}_{g}^{t}$ represents the second fused feature.

According to the technical solution of the embodiment of the present disclosure, the local feature similarity between the local features is calculated, the first matched feature and the second matched feature are calculated according to the local feature similarity, and finally, the first matched feature and the second matched feature are subjected to feature extraction to obtain the new features by low-order feature alignment, i.e., the first fused feature and the second fused feature. Subsequently, pedestrian matching is carried out based on the aligned local features, such that a more accurate matching result can be obtained.

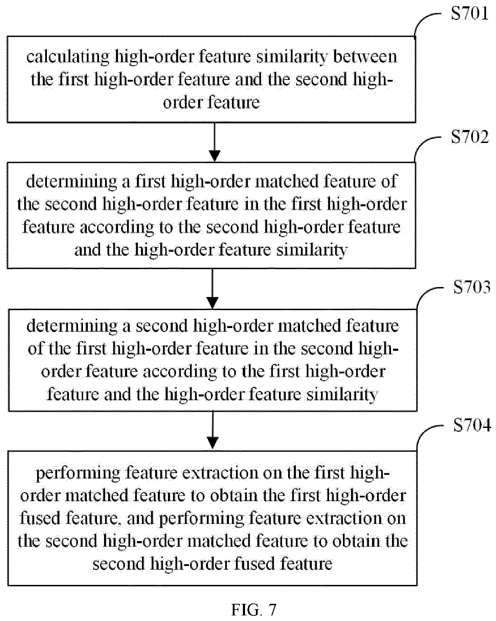

**In** some other embodiments, as shown in FIG. 7, the performing feature alignment on the first high-order feature and the second high-order feature to obtain a first high-order fused feature and a second high-order fused feature includes steps S701 to S704:
S701: calculating high-order feature similarity between the first high-order feature and the second high-order feature.

The similarity between the high-order features may be calculated in any manner. **In** an embodiment, the similarity between the high-order features may be determined by network learning, which may be represented as: ${M}_{2} = {F}_{p}^{a} ∗ A ∗ {\left[{F}_{g}^{a}\right]}^{T}$
wherein M2 represents the high-order feature similarity, ${F}_{p}^{a}$ represents the first high-order feature, ${F}_{g}^{a}$ represents the second high-order feature, ${\left[{F}_{g}^{a}\right]}^{T}$ represents transposition of ${F}_{g}^{a}$, and A represents a network parameter matrix. A dimension of the network parameter matrix A is [1,024, 1,024].

In other embodiments, the calculation of the similarity between the first high-order feature and the second high-order feature may be implemented in any other manner.

S702: determining a first high-order matched feature of the second high-order feature in the first high-order feature according to the second high-order feature and the high-order feature similarity.

In some embodiments, the determining a first high-order matched feature of the second high-order feature in the first high-order feature according to the second high-order feature and the high-order feature similarity includes: calculating a third product of the high-order feature similarity and the second high-order feature; and determining a sum of the third product and the first high-order feature as the first high-order matched feature.

In a specific embodiment, the calculating a third product of the high-order feature similarity and the second high-order feature may be represented as: ${F}_{g}^{a 1} = M 1 ∗ {F}_{g}^{a}$
wherein ${F}_{g}^{a 1}$ denotes the third product, M2 denotes the high-order feature similarity, and ${F}_{g}^{a}$ represents the second high-order feature.

The determining a sum of the third product and the first high-order feature as the first high-order matched feature is represented as: ${F}_{p}^{a 2} = {F}_{p}^{a} + {F}_{g}^{a 1}$
wherein ${F}_{p}^{a 2}$ denotes the first high-order matched feature, and ${F}_{p}^{a}$ represents the first high-order feature.

S703: determining a second high-order matched feature of the first high-order feature in the second high-order feature according to the first high-order feature and the high-order feature similarity.

Similarly to the determination of the first high-order matched feature, the second high-order matched feature may be determined according to the first high-order feature and the high-order feature similarity. In contrast, in the present embodiment, the high-order feature similarity is transposed first, and the second high-order matched feature is determined by using the transposed high-order feature similarity.

In some embodiments, the determining a second matched feature of the first high-order feature in the second high-order feature according to the first high-order feature and the high-order feature similarity includes: transposing the high-order feature similarity to obtain a transposed high-order feature similarity; calculating a fourth product of the transposed high-order feature similarity and the first high-order feature; and determining a sum of the fourth product and the second high-order feature as the second high-order matched feature.

In a specific embodiment, the calculating a fourth product of the transposed high-order feature similarity and the first high-order feature may be represented as: ${F}_{p}^{a 1} = {M}_{2}^{T} ∗ {F}_{p}^{a}$ wherein ${F}_{p}^{a 1}$ denotes the fourth product, ${M}_{2}^{T}$ denotes the transposed high-order feature similarity, and ${F}_{p}^{a}$ represents the first high-order feature.

The determining a sum of the fourth product and the second high-order feature as the second high-order matched feature is represented as: ${F}_{g}^{a 2} = {F}_{g}^{a} + {F}_{p}^{a 1}$
wherein ${F}_{g}^{a 2}$ denotes the second high-order matched feature, and ${F}_{g}^{a}$ represents the second high-order feature.

S704: performing feature extraction on the first high-order matched feature to obtain the first high-order fused feature, and performing feature extraction on the second high-order matched feature to obtain the second high-order fused feature.

After the first high-order matched feature and the second high-order matched feature are obtained, feature extraction is carried out to obtain new fused features after the alignment of the high-order features, i.e., the first high-order fused feature and the second high-order fused feature.

In some embodiments, the feature extraction performed on the input high-order matched features may be implemented by fc+relu. An fc layer is a fully-connected layer, and each node of the fully-connected layer is connected with all nodes of a previous layer and used for integrating the extracted features. An relu layer typically consists of an activation function. The high-order matched features include the first high-order matched feature and the second high-order matched feature.

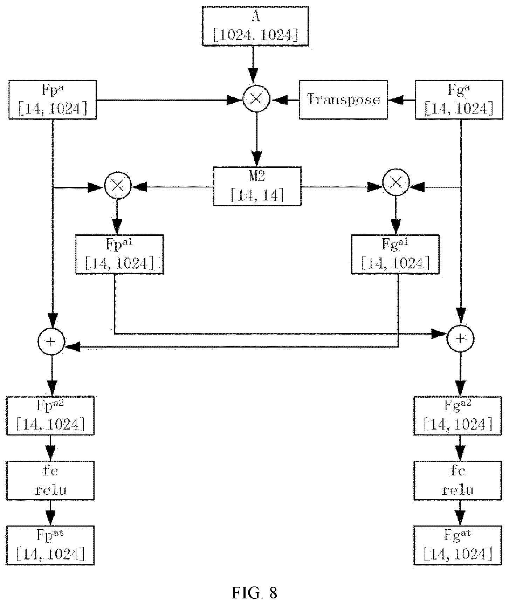

In a specific embodiment, as shown in FIG. 8 which is a flowchart of the step of performing feature alignment on the first high-order feature and the second high-order feature, ${F}_{p}^{a}$ represents the first high-order feature and ${F}_{g}^{a}$ represents the second high-order feature; ${F}_{p}^{at}$ represents the first high-order fused feature and ${F}_{g}^{at}$ represents the second high-order fused feature.

According to the technical solution of the embodiment of the present disclosure, the high-order feature similarity between the high-order features is calculated, the first high-order matched feature and the second high-order matched feature are calculated according to the high-order feature similarity, and finally, the first high-order matched feature and the second high-order matched feature are subjected to feature extraction to obtain the new features by high-order feature alignment, i.e., the first high-order fused feature and the second high-order fused feature. Subsequently, pedestrian matching is carried out based on the aligned high-order features, such that a more accurate matching result can be obtained.

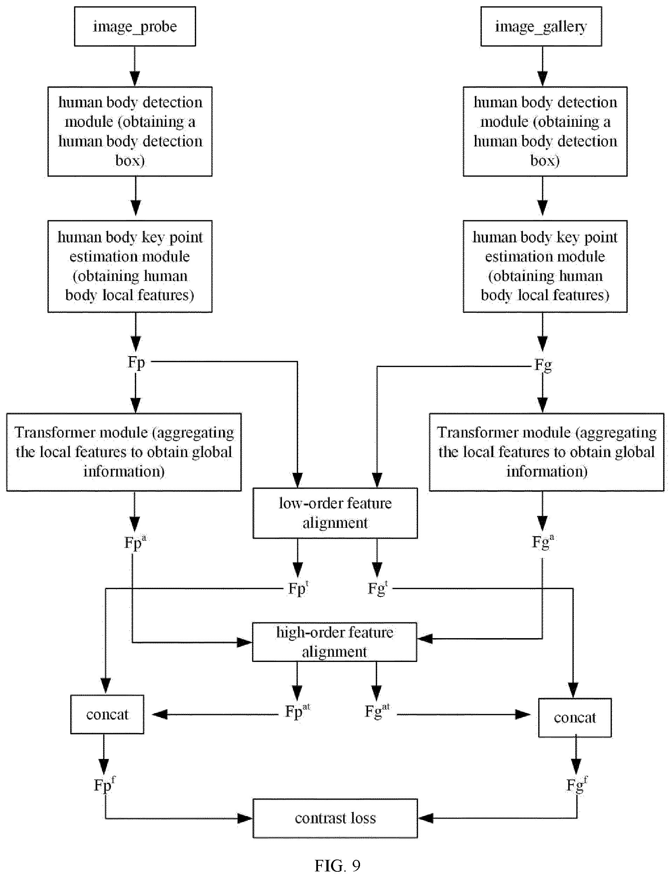

In a specific embodiment, FIG. 9 shows a specific schematic flowchart of the pedestrian matching method according to a specific embodiment.
(1) Two images probe and gallery are input:
   the two images pass through a human body detection model to obtain human body detection boxes bbox, and the human body detection boxes are sent into a human body key point estimation module.
(2) The human body detection boxes obtained in the step (1) are input:
   firstly, 1*1 convolution is performed on a feature map corresponding to each human body detection box to uniformly convert channels into 1,024, and then, a length and a width of the feature map are uniformly pooled into [16, 8] by ROIAlign, and at this point, a dimension of each human body feature map G1 is obtained as [1,024, 16, 8].

G1 is subjected to three convolution blocks (conv(3, 3), BN, relu) to obtain feature maps [1,024, 16, 8], [512, 16, 8], [256, 16, 8] in sequence. Finally, a thermodynamic diagram [14, 16, 8] of all key points is obtained through conv(1, 1), BN and relu. (14 key points of the human body are set and include the head, the neck, the left hand, the left elbow, the left shoulder, the left crotch, the left knee, the left foot, the right hand, the right elbow, the right shoulder, the right crotch, the right knee and the right foot).

A dimension of a thermodynamic diagram of each key point is [1, 16, 8], and then, the thermodynamic diagram of each key point is repeated to change the dimension into [1,024, 16, 8], the dimension is multiplied by the feature map G1 [1,024, 16, 8] of the human body to obtain a feature map [2,048, 16, 8] of the key point, and finally, global average pooling is carried out to obtain a feature vector [1,024] of the key point. Similarly, the feature vector of each key point can be obtained. That is, a first local feature Fₚ and a second local feature F_{g} are obtained, and dimensions of Fₚ and F_{g} are [14, 1,024].
(3) Fₚ and F_{g} are sent into a transformer encoding module to obtain a first high-order feature ${F}_{p}^{a}$ and a second high-order feature ${F}_{g}^{a}$. For details of performing aggregation to obtain the high-order features, reference is made to the description of the embodiment shown in FIG. 3.
(4) Meanwhile, Fₚ and F_{g} is sent into a low-order feature alignment strategy module to obtain ${F}_{p}^{t}$ and ${F}_{g}^{t}$ with dimensions of [14, 1,024]. For details of low-order feature alignment, reference is made to the description of the embodiment shown in FIG. 5.
(5) According to the step (3), high-order features ${F}_{p}^{a}$ and ${F}_{g}^{a}$, with dimensions of [14, 1,024] are obtained. The high-order features are sent into a high-order feature matching strategy module to obtain ${F}_{p}^{at}$ and ${F}_{g}^{at}$ with dimensions of [14, 1,024]. For details of high-order feature alignment, reference is made to the description of the embodiment shown in FIG. 7.
(6) Concat is correspondingly performed on ${F}_{p}^{t}$ and ${F}_{g}^{t}$ obtained in the step (4) as well as ${F}_{p}^{at}$ and ${F}_{g}^{at}$ obtained in the step (5) to splice vectors: ${F}_{p}^{f} = concat \left({F}_{p}^{t}, {F}_{p}^{at}\right)$ ${F}_{g}^{f} = concat \left({F}_{g}^{t}, {F}_{g}^{at}\right)$
(7) A first spliced feature ${F}_{p}^{f}$ and a second spliced feature ${F}_{g}^{f}$ are sent into a contrastive loss function, a contrastive loss value between ${F}_{p}^{f}$ and ${F}_{g}^{f}$ is calculated, and finally, whether the images probe and gallery include a same pedestrian is judged according to the contrastive loss value.

In the pedestrian matching method according to the embodiment of the present disclosure, a feature aligning module is designed, a relationship between the features is integrated through a low-order feature alignment strategy and a high-order feature alignment strategy, and information between the features is comprehensively utilized, such that the extracted features have a better performance. The low-order feature alignment strategy means that matching is performed according to similarity of the local features of the key points of the human body, and matching of two points depends on the similarity of the two points and considers an influence of the matching of the two points on other matching, such that one kind of matching is selected to maximize total energy. Therefore, the high-order feature matching strategy (the high-order features can be understood as edge feature information) is added in the pedestrian matching method according to the embodiment of the present disclosure, and specifically, the previously extracted local features of the key points of the human body are aggregated into high-order feature information by the transformer encoding module, and then, the network learns a way of matching the high-order features, resulting in higher robustness. In addition, when aggregation is performed to obtain the high-order features using transformer encoding, according to a prior topological structure relationship of the key points of the human body, an adjusting coefficient p is calculated to perform aggregation to obtain high-order semantic information according to a degree of the influence between the key points.

The present application also provides an application scenario, and the pedestrian matching method is applied to the application scenario. Specifically, the application of the pedestrian matching method in the application scenario is as follows.

In the present embodiment, the pedestrian matching method is applied to an application scenario of detection of person staying in video monitoring, and in the application scenario, suspicious phenomena of person staying for a long time or loitering are required to be detected and alarmed. Whether a same person is included may be judged by comparing the features of the human body detected in plural continuous frames, thereby determining whether the person stays at a same place for a long time.

In the application scenario, the pedestrian matching method can be triggered when a person appears in a monitoring image. Two images are acquired from the monitoring device at a preset time interval, and pedestrian matching detection is performed on the two images. Further, when the same pedestrian is continuously detected to be included in the two images at the preset time interval plural times, the person appearing in the monitoring image stays for a long time, and the situation can be warned. The preset time can be set according to actual conditions, and for example, can be set to 1 minute, 3 minutes, 5 minutes, or the like. According to actual situations, the alarm can also be set to be triggered when a number of times of continuously detecting the same pedestrian in the monitoring image reaches a preset time number.

All the above optional technical solutions may be combined arbitrarily to form optional embodiments of the present application, and are not repeated herein.

An apparatus according to the embodiments of the present disclosure is described below, and may be configured to perform the method according to the embodiments of the present disclosure. For details not disclosed in the embodiments of the apparatus according to the present disclosure, reference is made to the embodiments of the method according to the present disclosure.

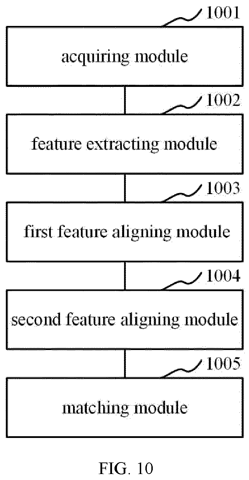

FIG. 10 is a schematic diagram of a pedestrian matching apparatus according to an embodiment of the present disclosure. As shown in FIG. 10, the pedestrian matching apparatus includes:
an acquiring module 1001 configured to acquire a first image and a second image;
a feature extracting module 1002 configured to respectively extract features of the first image and the second image to obtain a first local feature, a second local feature, a first high-order feature and a second high-order feature, the first local feature and the second local feature including local feature vectors corresponding to key points of a human body respectively;
a first feature aligning module 1003 configured to perform feature alignment on the first local feature and the second local feature to obtain a first fused feature and a second fused feature;
a second feature aligning module 1004 configured to perform feature alignment on the first high-order feature and the second high-order feature to obtain a first high-order fused feature and a second high-order fused feature; and
a matching module 1005 configured to determine, on the basis of the first fused feature, the second fused feature, the first high-order fused feature and the second high-order fused feature, whether the first image and the second image include a same pedestrian.

According to the technical solution of the embodiments of the present disclosure, the features of the acquired first and second images are extracted to obtain the local features and the high-order features corresponding to the key points of the human body in the two images, the features are described as the first local feature, the second local feature, the first high-order feature and the second high-order feature respectively, the feature alignment is performed on the first local feature and the second local feature to obtain the first fused feature and the second fused feature, the feature alignment is performed on the first high-order feature and the second high-order feature to obtain the first high-order fused feature and the second high-order fused feature, and whether the two images include the same pedestrian is determined based on the first fused feature, the second fused feature, the first high-order fused feature and the second high-order fused feature. By extracting the local features and the high-order features of the human body in the image and performing the feature alignment on the local features and the high-order features by adopting different feature alignment strategies, a relationship between the features is integrated, information between the features is comprehensively utilized, more effective features are obtained, an influence of the abnormal points or the outliers in the image on pedestrian matching is reduced, and a more accurate matching result is obtained.

In some embodiments, the feature extracting module of the above pedestrian matching apparatus includes:
a local feature extracting submodule configured to respectively extract local features of the human body of the first image and the second image to obtain the first local features and the second local features; and
an aggregation submodule configured to perform feature aggregation on the first local features to obtain the first high-order feature, and perform feature aggregation on the second local features to obtain the second high-order feature.

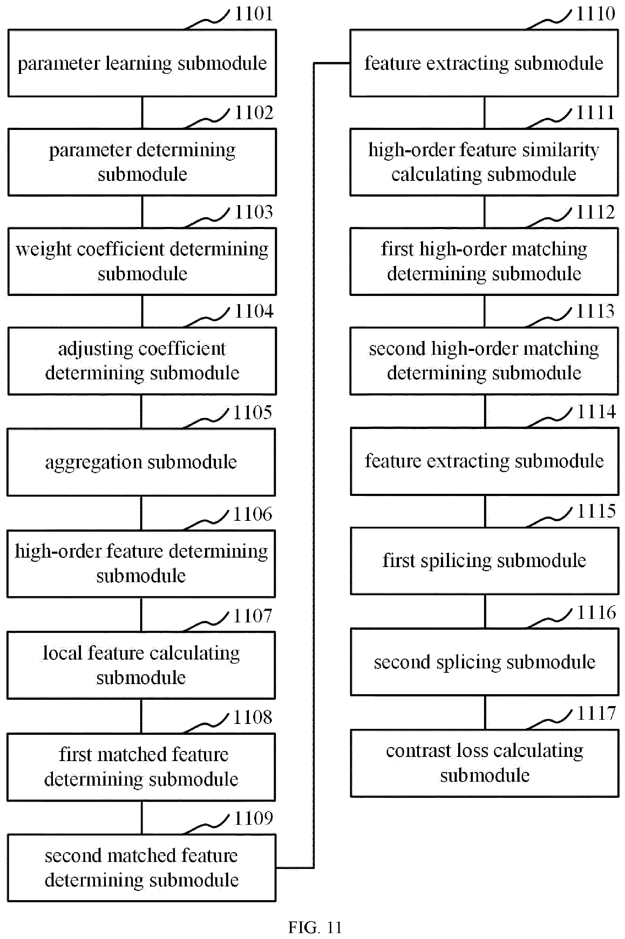

In some embodiments, more than two key points of the human body are included; as shown in FIG. 11, in the present embodiment, the feature extracting module of the above apparatus includes:
a parameter learning submodule 1101 configured to, according to the local feature vector corresponding to each key point of the human body, learn and determine a first parameter, a second parameter and a third parameter corresponding to the local feature;
a parameter determining submodule 1102 configured to generate a query, a key and a value corresponding to each local feature vector according to the first parameter, the second parameter and the third parameter;
a weight coefficient determining submodule 1103 configured to determine a weight coefficient between every two local feature vectors based on the query and the key;
an adjusting coefficient determining submodule 1104 configured to, for any local feature vector, determine an adjusting coefficient according to a relationship between the local feature vector and each of other local feature vectors;
an aggregation submodule 105 configured to obtain an aggregation feature corresponding to the local feature according to the weight coefficient, the adjusting coefficient and the value; and
a high-order feature determining submodule 1106 configured to determine the high-order features according to the aggregation features corresponding to the local features, the local features including the first local feature and the second local feature, and the high-order features including the first high-order feature and the second high-order feature.

In some embodiments, with continued reference to FIG. 11, the first feature aligning module of the above apparatus includes:
a local feature calculating submodule 1107 configured to calculate local feature similarity between the first local feature and the second local feature;
a first matched feature determining submodule 1108 configured to determine a first matched feature of the second local feature in the first local feature according to the second local feature and the local feature similarity;
a second matched feature determining submodule 1109 configured to determine a second matched feature of the first local feature in the second local feature according to the first local feature and the local feature similarity; and
a feature extracting submodule 1110 configured to perform feature extraction on the first matched feature to obtain the first fused feature, and perform feature extraction on the second matched feature to obtain the second fused feature.

In some embodiments, the first matched feature determining submodule of the above apparatus includes: a multiplication operation unit configured to calculate a first product of the local feature similarity and the second local feature; and an addition operation unit configured to determine a sum of the first product and the first local feature as the first matched feature.

In some embodiments, the second matched feature determining submodule of the above apparatus includes: a transposing unit configured to transpose the local feature similarity to obtain a transposed local feature similarity; a multiplication operation unit configured to calculate a second product of the transposed local feature similarity and the first local feature; and an addition operation unit configured to determine a sum of the second product and the second local feature as the second matched feature.

In some embodiments, with continued reference to FIG. 11, the second feature aligning module of the above apparatus includes:
a high-order feature similarity calculating submodule 1111 configured to calculate high-order feature similarity between the first high-order feature and the second high-order feature;
a first high-order matching determining submodule 1112 configured to determine a first high-order matched feature of the second high-order feature in the first high-order feature according to the second high-order feature and the high-order feature similarity;
a second high-order matching determining submodule 1113 configured to determine a second high-order matched feature of the first high-order feature in the second high-order feature according to the first high-order feature and the high-order feature similarity; and
a feature extracting submodule 1114 configured to perform feature extraction on the first high-order matched feature to obtain the first high-order fused feature, and perform feature extraction on the second high-order matched feature to obtain the second high-order fused feature.

In some embodiments, with continued reference to FIG. 11, the matching module of the above apparatus includes:
a first splicing submodule 1115 configured to splice the first fused feature and the first high-order fused feature to obtain a first spliced feature;
a second splicing submodule 1116 configured to splice the second fused feature and the second high-order fused feature to obtain a second spliced feature; and
a contrastive loss calculating submodule 1117 configured to calculate a contrastive loss value between the first spliced feature and the second spliced feature, and determine whether the first image and the second image include the same pedestrian according to the contrastive loss value.

It should be understood that, the sequence numbers of the steps in the foregoing embodiments do not imply an execution sequence, and the execution sequence of each process should be determined by functions and internal logic of the process, and should not constitute any limitation to the implementation process of the embodiments of the present disclosure.

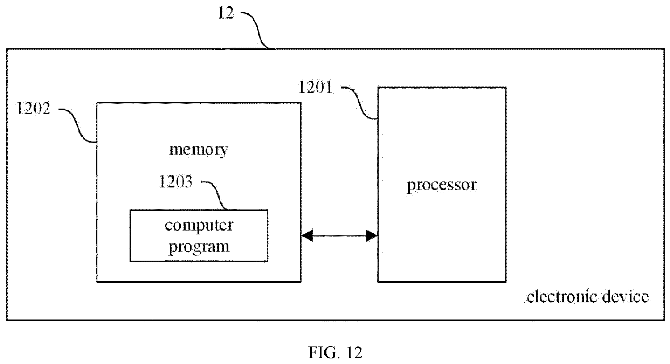

FIG. 12 is a schematic diagram of an electronic device 12 according to an embodiment of the present disclosure. As shown in FIG. 12, the electronic device 12 according to the present embodiment includes: a processor 1201, a memory 1202, and a computer program 1203 stored in the memory 1202 and executable on the processor 1201. The steps in the various method embodiments described above are implemented when the processor 1201 executes the computer program 1203. Alternatively, the processor 1201 achieves the functions of each module/unit in each apparatus embodiment described above when executing the computer program 1203.

Exemplarily, the computer program 1203 may be partitioned into one or more modules/units, which are stored in the memory 1202 and executed by the processor 1201 to complete the present disclosure. One or more of the modules/units may be a series of computer program instruction segments capable of performing specific functions, the instruction segments describing the execution of the computer program 1203 in the electronic device 12.

The electronic device 12 may be a desktop computer, a notebook, a palm computer, a cloud server or another electronic device. The electronic device 12 may include, but is not limited to, the processor 1201 and the memory 1202. Those skilled in the art may understand that a structure shown in FIG. 12 is only an example of the electronic device 12 and does not limit the electronic device 12, which may include more or fewer components than those shown in the drawings, or some components may be combined, or a different component deployment may be used. For example, the electronic device may further include an input/output device, a network access device, a bus, or the like.

The processor 1201 may be a Central Processing Unit (CPU), or other general-purpose processors, Digital Signal Processors (DSP), Application Specific Integrated Circuits (ASIC), Field-Programmable Gate Arrays (FPGA) or other programmable logic devices, discrete gates or transistor logic devices, discrete hardware components, etc. The general-purpose processor may be a microprocessor or the processor may be any general processor, or the like.

The memory 1202 may be an internal storage unit of the electronic device 12, for example, a hard disk or memory of the electronic device 12. The memory 1202 may also be an external storage device of the electronic device 12, such as a plug-in hard disk, a Smart Media Card (SMC), a Secure Digital (SD) Card, a Flash Card, or the like, configured on the electronic device 12. Further, the memory 1202 may also include both the internal storage unit and the external storage device of the electronic device 12. The memory 1202 is configured to store the computer program and other programs and data required by the electronic device. The memory 1202 may be further configured to temporarily store data which has been or will be outputted.

It may be clearly understood by those skilled in the art that, for convenient and brief description, division of the above functional units and modules is used as an example for illustration. In practical application, the above functions can be allocated to different functional units and modules and implemented as required; that is, an internal structure of the apparatus is divided into different functional units or modules to accomplish all or some of the functions described above. The functional units or modules in the embodiments may be integrated into one processing unit, or each of the units may exist alone physically, or two or more units are integrated into one unit, and the integrated unit may be implemented in a form of hardware, or may also be implemented in a form of a software functional unit. In addition, specific names of all the functional units or modules are merely for facilitating the differentiation, but are not intended to limit the protection scope of this application. For a specific working process of the units or modules in the above system, reference may be made to the corresponding process in the foregoing method embodiments, which is not repeated herein.

In the above embodiments, the description of each embodiment has its own emphasis. For a part not described in detail in one embodiment, reference may be made to relevant description of other embodiments.

Those of ordinary skill in the art would appreciate that the units and algorithmic steps of the examples described in combination with the embodiments disclosed herein can be implemented by electronic hardware or a combination of computer software and electronic hardware. Whether these functions are performed by hardware or software depends on a specific application and design constraints of the technical solution. Technical professionals may achieve the described functions in different methods for each particular application, but such implementation should not be considered beyond the scope of the present disclosure.

In the embodiments according to the present disclosure, it is to be understood that the disclosed apparatus/electronic device and method can be implemented in other ways. For example, the embodiment of the apparatus/electronic device described above is merely schematic. For example, the division of the modules or units is merely logical function division, and there may be other division manners in an actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between apparatuses or units may be implemented in an electric form, a mechanical form, or other forms.

The units described as separate parts may or may not be physically separate, and parts displayed as units may or may not be physical units, may be located at one position, or may be distributed on a plurality of network units. Some or all of the units may be selected according to actual needs to achieve the objectives of the solutions of the embodiments.

In addition, the functional units in the embodiments of the present disclosure may be integrated into one processing unit, or each of the units may exist alone physically, or two or more units are integrated into one unit. The integrated unit may be implemented in a form of hardware or in a form of a software functional unit.

The integrated module/unit may be stored in a computer-readable storage medium when implemented in the form of the software functional unit and sold or used as a separate product. Based on such understanding, all or some of the processes in the method according to the above embodiments may be realized in the present disclosure, or completed by the computer program instructing related hardware, the computer program may be stored in the computer-readable storage medium, and when the computer program is executed by the processor, the steps of the above method embodiments may be realized. The computer program may include a computer program code, which may be in a form of a source code, an object code or an executable file or in some intermediate forms. The computer-readable medium may include any entity or apparatus capable of carrying the computer program code, a recording medium, a USB flash drive, a removable hard disk, a magnetic disk, an optical disk, a computer memory, a Read-Only Memory (ROM), a Random Access Memory (RAM), an electrical carrier signal, a telecommunication signal, a software distribution medium, and so on. It should be noted that content included in the computer-readable medium may be appropriately increased or decreased according to requirements of legislation and patent practice in a jurisdiction, for example, in some jurisdictions, according to legislation and patent practice, the computer-readable medium does not include the electrical carrier signal and the telecommunication signal.

## Claims

1. A pedestrian matching method, comprising:
S101: acquiring a first image and a second image;
S102: respectively extracting features of the first image and the second image to obtain a first local feature, a second local feature, a first high-order feature and a second high-order feature, the first local feature and the second local feature comprising local feature vectors corresponding to key points of a human body respectively, wherein the first local feature and the first high-order feature are extracted from the first image, and the second local feature and the second high-order feature are extracted from the second image;
S103: performing feature alignment on the first local feature and the second local feature to obtain a first fused feature and a second fused feature;
S104: performing feature alignment on the first high-order feature and the second high-order feature to obtain a first high-order fused feature and a second high-order fused feature; and
S105: determining, on the basis of the first fused feature, the second fused feature, the first high-order fused feature and the second high-order fused feature, whether the first image and the second image comprise a same pedestrian;
wherein the respectively extracting features of the first image and the second image to obtain a first local feature, a second local feature, a first high-order feature and a second high-order feature (S102) comprises:
respectively extracting local features of the human body of the first image and the second image to obtain the first local features and the second local features; and
performing feature aggregation on the first local features to obtain the first high-order feature, and performing feature aggregation on the second local features to obtain the second high-order feature;
wherein the performing feature alignment on the first local feature and the second local feature to obtain a first fused feature and a second fused feature (S103) comprises:
S501: calculating local feature similarity between the first local feature and the second local feature;
S502: determining a first matched feature of the second local feature in the first local feature according to the second local feature and the local feature similarity;
S503: determining a second matched feature of the first local feature in the second local feature according to the first local feature and the local feature similarity; and
S504: performing feature extraction on the first matched feature to obtain the first fused feature, and performing feature extraction on the second matched feature to obtain the second fused feature;
wherein:
more than two key points of the human body are comprised;
the performing feature aggregation on the local features to obtain the high-order features comprises:
S301: according to the local feature vector corresponding to each key point of the human body, learning and determining a first parameter, a second parameter and a third parameter corresponding to the local feature;
S302: generating a query, a key and a value corresponding to each local feature vector according to the first parameter, the second parameter and the third parameter;
S303: determining a weight coefficient between every two local feature vectors based on the query and the key;
S304: for any local feature vector, determining an adjusting coefficient according to a relationship between the local feature vector and each of other local feature vectors;
S305: obtaining an aggregation feature corresponding to the local feature according to the weight coefficient, the adjusting coefficient and the value; and
S306: determining the high-order features according to the aggregation features corresponding to the local features;
the local features comprising the first local feature and the second local feature, and the high-order features comprising the first high-order feature and the second high-order feature;
wherein the determining a first matched feature of the second local feature in the first local feature according to the second local feature and the local feature similarity (S502) comprises: calculating a first product of the local feature similarity and the second local feature; and determining a sum of the first product and the first local feature as the first matched feature;
the determining a second matched feature of the first local feature in the second local feature according to the first local feature and the local feature similarity (S503) comprises: transposing the local feature similarity to obtain a transposed local feature similarity; calculating a second product of the transposed local feature similarity and the first local feature; and determining a sum of the second product and the second local feature as the second matched feature;
wherein the performing feature alignment on the first high-order feature and the second high-order feature to obtain a first high-order fused feature and a second high-order fused feature (S104) comprises:
S701: calculating high-order feature similarity between the first high-order feature and the second high-order feature;
S702: determining a first high-order matched feature of the second high-order feature in the first high-order feature according to the second high-order feature and the high-order feature similarity;
S703: determining a second high-order matched feature of the first high-order feature in the second high-order feature according to the first high-order feature and the high-order feature similarity; and
S704: performing feature extraction on the first high-order matched feature to obtain the first high-order fused feature, and performing feature extraction on the second high-order matched feature to obtain the second high-order fused feature;
wherein the determining, on the basis of the first fused feature, the second fused feature, the first high-order fused feature and the second high-order fused feature, whether the first image and the second image comprise a same pedestrian (S105) comprises:
S201: splicing the first fused feature and the first high-order fused feature to obtain a first spliced feature;
S202: splicing the second fused feature and the second high-order fused feature to obtain a second spliced feature; and
S203: calculating a contrastive loss value between the first spliced feature and the second spliced feature, and determining whether the first image and the second image comprise the same pedestrian according to the contrastive loss value.

2. A pedestrian matching apparatus configured to implement the steps of the method according to claim 1, **characterized by** comprising:
an acquiring module (1001) configured to acquire a first image and a second image;
a feature extracting module (1002) configured to respectively extract features of the first image and the second image to obtain a first local feature, a second local feature, a first high-order feature and a second high-order feature, the first local feature and the second local feature comprising local feature vectors corresponding to key points of a human body respectively;
a first feature aligning module (1003) configured to perform feature alignment on the first local feature and the second local feature to obtain a first fused feature and a second fused feature;
a second feature aligning module (1004) configured to perform feature alignment on the first high-order feature and the second high-order feature to obtain a first high-order fused feature and a second high-order fused feature; and
a matching module (1005) configured to determine, on the basis of the first fused feature, the second fused feature, the first high-order fused feature and the second high-order fused feature, whether the first image and the second image comprise a same pedestrian.

3. An electronic device, comprising a memory (1202), a processor (1201) and a computer program (1203) stored in the memory (1202) and runnable on the processor (1201), **characterized in that** the processor (1201), when executing the computer program (1203), implements the steps of the method according to claim 1.

4. A computer-readable storage medium storing a computer program, **characterized in that** the computer program, when executed by a processor, implements the steps of the method according to claim 1.

## Patentansprüche

1. Verfahren zum Fußgängerabgleich, umfassend:
S101: Erfassen eines ersten Bildes und eines zweiten Bildes;
S102: jeweiliges Extrahieren von Merkmalen des ersten Bildes und des zweiten Bildes, um ein erstes lokales Merkmal, ein zweites lokales Merkmal, ein erstes Merkmal höherer Ordnung und ein zweites Merkmal höherer Ordnung zu erhalten, wobei das erste lokale Merkmal und das zweite lokale Merkmal jeweils lokale Merkmalsvektoren umfassen, die Schlüsselpunkten eines menschlichen Körpers entsprechen, wobei das erste lokale Merkmal und das erste Merkmal höherer Ordnung aus dem ersten Bild extrahiert werden und das zweite lokale Merkmal und das zweite Merkmal höherer Ordnung aus dem zweiten Bild extrahiert werden;
S103: Durchführen einer Merkmalsausrichtung an dem ersten lokalen Merkmal und dem zweiten lokalen Merkmal, um ein erstes fusioniertes Merkmal und ein zweites fusioniertes Merkmal zu erhalten;
S104: Durchführen einer Merkmalsausrichtung an dem ersten Merkmal höherer Ordnung und dem zweiten Merkmal höherer Ordnung, um ein erstes fusioniertes Merkmal höherer Ordnung und ein zweites fusioniertes Merkmal höherer Ordnung zu erhalten; und
S105: Bestimmen auf der Grundlage des ersten fusionierten Merkmals, des zweiten fusionierten Merkmals, des ersten fusionierten Merkmals höherer Ordnung und des zweiten fusionierten Merkmals höherer Ordnung, ob das erste Bild und das zweite Bild denselben Fußgänger umfassen;
wobei das jeweilige Extrahieren von Merkmalen des ersten Bildes und des zweiten Bildes, um ein erstes lokales Merkmal, ein zweites lokales Merkmal, ein erstes Merkmal höherer Ordnung und ein zweites Merkmal höherer Ordnung zu erhalten (S102), umfasst:
jeweiliges Extrahieren lokaler Merkmale des menschlichen Körpers des ersten Bildes und des zweiten Bildes, um die ersten lokalen Merkmale und die zweiten lokalen Merkmale zu erhalten; und
Durchführen einer Merkmalsaggregation an den ersten lokalen Merkmalen, um das erste Merkmal höherer Ordnung zu erhalten, und Durchführen einer Merkmalsaggregation an den zweiten lokalen Merkmalen, um das zweite Merkmal höherer Ordnung zu erhalten;
wobei das Durchführen einer Merkmalsausrichtung an dem ersten lokalen Merkmal und dem zweiten lokalen Merkmal, um ein erstes fusioniertes Merkmal und ein zweites fusioniertes Merkmal zu erhalten (S103), umfasst:
S501: Berechnen einer lokalen Merkmalsähnlichkeit zwischen dem ersten lokalen Merkmal und dem zweiten lokalen Merkmal;
S502: Bestimmen eines ersten zugeordneten Merkmals des zweiten lokalen Merkmals in dem ersten lokalen Merkmal gemäß dem zweiten lokalen Merkmal und der lokalen Merkmalsähnlichkeit;
S503: Bestimmen eines zweiten zugeordneten Merkmals des ersten lokalen Merkmals in dem zweiten lokalen Merkmal gemäß dem ersten lokalen Merkmal und der lokalen Merkmalsähnlichkeit; und
S504: Durchführen einer Merkmalsextraktion an dem ersten zugeordneten Merkmal, um das erste fusionierte Merkmal zu erhalten, und Durchführen einer Merkmalsextraktion an dem zweiten zugeordneten Merkmal, um das zweite fusionierte Merkmal zu erhalten;
wobei:
mehr als zwei Schlüsselpunkte des menschlichen Körpers umfasst sind;
das Durchführen einer Merkmalsaggregation an den lokalen Merkmalen, um die Merkmale höherer Ordnung zu erhalten, umfasst:
S301: gemäß dem lokalen Merkmalsvektor, der dem jeweiligen Schlüsselpunkt des menschlichen Körpers entspricht, Lernen und Bestimmen eines ersten Parameters, eines zweiten Parameters und eines dritten Parameters, die dem lokalen Merkmal entsprechen;
S302: Erzeugen einer Query, eines Key und eines Value, die jedem lokalen Merkmalsvektor gemäß dem ersten Parameter, dem zweiten Parameter und dem dritten Parameter entsprechen;
S303: Bestimmen eines Gewichtungskoeffizienten zwischen jeweils zwei lokalen Merkmalsvektoren auf der Grundlage der Query und des Key;
S304: für einen beliebigen lokalen Merkmalsvektor Bestimmen eines Anpassungskoeffizienten gemäß einer Beziehung zwischen dem lokalen Merkmalsvektor und jedem der übrigen lokalen Merkmalsvektoren;
S305: Erhalten eines Aggregationsmerkmals, das dem lokalen Merkmal gemäß dem Gewichtungskoeffizienten, dem Anpassungskoeffizienten und dem Value entspricht; und
S306: Bestimmen der Merkmale höherer Ordnung gemäß den Aggregationsmerkmalen, die den lokalen Merkmalen entsprechen;
wobei die lokalen Merkmale das erste lokale Merkmal und das zweite lokale Merkmal umfassen und die Merkmale höherer Ordnung das erste Merkmal höherer Ordnung und das zweite Merkmal höherer Ordnung umfassen;
wobei das Bestimmen eines ersten zugeordneten Merkmals des zweiten lokalen Merkmals in dem ersten lokalen Merkmal gemäß dem zweiten lokalen Merkmal und der lokalen Merkmalsähnlichkeit (S502) umfasst: Berechnen eines ersten Produkts der lokalen Merkmalsähnlichkeit und des zweiten lokalen Merkmals; und Bestimmen einer Summe des ersten Produkts und des ersten lokalen Merkmals als erstes zugeordnetes Merkmal;
das Bestimmen eines zweiten zugeordneten Merkmals des ersten lokalen Merkmals in dem zweiten lokalen Merkmal gemäß dem ersten lokalen Merkmal und der lokalen Merkmalsähnlichkeit (S503) umfasst: Transponieren der lokalen Merkmalsähnlichkeit, um eine transponierte lokale Merkmalsähnlichkeit zu erhalten; Berechnen eines zweiten Produkts der transponierten lokalen Merkmalsähnlichkeit und des ersten lokalen Merkmals; und Bestimmen einer Summe des zweiten Produkts und des zweiten lokalen Merkmals als zweites zugeordnetes Merkmal;
wobei das Durchführen einer Merkmalsausrichtung an dem ersten Merkmal höherer Ordnung und dem zweiten Merkmal höherer Ordnung, um ein erstes fusioniertes Merkmal höherer Ordnung und ein zweites fusioniertes Merkmal höherer Ordnung zu erhalten (S104), umfasst:
S701: Berechnen einer Merkmalsähnlichkeit höherer Ordnung zwischen dem ersten Merkmal höherer Ordnung und dem zweiten Merkmal höherer Ordnung;
S702: Bestimmen eines ersten zugeordneten Merkmals höherer Ordnung des zweiten Merkmals höherer Ordnung in dem ersten Merkmal höherer Ordnung gemäß dem zweiten Merkmal höherer Ordnung und der Merkmalsähnlichkeit höherer Ordnung;
S703: Bestimmen eines zweiten zugeordneten Merkmals höherer Ordnung des ersten Merkmals höherer Ordnung in dem zweiten Merkmal höherer Ordnung gemäß dem ersten Merkmal höherer Ordnung und der Merkmalsähnlichkeit höherer Ordnung; und
S704: Durchführen einer Merkmalsextraktion an dem ersten zugeordneten Merkmal höherer Ordnung, um das erste fusionierte Merkmal höherer Ordnung zu erhalten, und Durchführen einer Merkmalsextraktion an dem zweiten zugeordneten Merkmal höherer Ordnung, um das zweite fusionierte Merkmal höherer Ordnung zu erhalten;
wobei das Bestimmen auf Grundlage des ersten fusionierten Merkmals, des zweiten fusionierten Merkmals, des ersten fusionierten Merkmals höherer Ordnung und des zweiten fusionierten Merkmals höherer Ordnung, ob das erste Bild und das zweite Bild denselben Fußgänger umfassen (S105), umfasst:
S201: Verketten des ersten fusionierten Merkmals und des ersten fusionierten Merkmals höherer Ordnung, um ein erstes verkettetes Merkmal zu erhalten;
S202: Verketten des zweiten fusionierten Merkmals und des zweiten fusionierten Merkmals höherer Ordnung, um ein zweites verkettetes Merkmal zu erhalten; und
S203: Berechnen eines Kontrastverlustwerts zwischen dem ersten verketteten Merkmal und dem zweiten verketteten Merkmal und Bestimmen, ob das erste Bild und das zweite Bild denselben Fußgänger umfassen, gemäß dem Kontrastverlustwert.

2. Vorrichtung zum Fußgängerabgleich, eingerichtet zum Implementieren der Schritte des Verfahrens nach Anspruch 1, **dadurch gekennzeichnet, dass** sie umfasst:
ein Erfassungsmodul (1001), eingerichtet zum Erfassen eines ersten Bildes und eines zweiten Bildes;
ein Merkmalsextraktionsmodul (1002), eingerichtet zum jeweiligen Extrahieren von Merkmalen des ersten Bildes und des zweiten Bildes, um ein erstes lokales Merkmal, ein zweites lokales Merkmal, ein erstes Merkmal höherer Ordnung und ein zweites Merkmal höherer Ordnung zu erhalten, wobei das erste lokale Merkmal und das zweite lokale Merkmal jeweils lokale Merkmalsvektoren umfassen, die Schlüsselpunkten eines menschlichen Körpers entsprechen;
ein erstes Merkmalsausrichtungsmodul (1003), eingerichtet zum Durchführen einer Merkmalsausrichtung an dem ersten lokalen Merkmal und dem zweiten lokalen Merkmal, um ein erstes fusioniertes Merkmal und ein zweites fusioniertes Merkmal zu erhalten;
ein zweites Merkmalsausrichtungsmodul (1004), eingerichtet zum Durchführen einer Merkmalsausrichtung an dem ersten Merkmal höherer Ordnung und dem zweiten Merkmal höherer Ordnung, um ein erstes fusioniertes Merkmal höherer Ordnung und ein zweites fusioniertes Merkmal höherer Ordnung zu erhalten; und
ein Abgleichsmodul (1005), eingerichtet zum Bestimmen auf der Grundlage des ersten fusionierten Merkmals, des zweiten fusionierten Merkmals, des ersten fusionierten Merkmals höherer Ordnung und des zweiten fusionierten Merkmals höherer Ordnung, ob das erste Bild und das zweite Bild denselben Fußgänger umfassen.

3. Elektronische Vorrichtung, umfassend einen Speicher (1202), einen Prozessor (1201) und ein Computerprogramm (1203), das in dem Speicher (1202) gespeichert ist und auf dem Prozessor (1201) ausgeführt werden kann, **dadurch gekennzeichnet, dass** der Prozessor (1201) beim Ausführen des Computerprogramms (1203) die Schritte des Verfahrens nach Anspruch 1 implementiert.

4. Computerlesbares Speichermedium, auf dem ein Computerprogramm gespeichert ist, **dadurch gekennzeichnet, dass** das Computerprogramm, wenn es durch einen Prozessor ausgeführt wird, die Schritte des Verfahrens nach Anspruch 1 implementiert.

## Revendications

1. Procédé d'appariement de piétons, comprenant :
S101 : l'acquisition d'une première image et d'une deuxième image ;
S102 : l'extraction de caractéristiques de la première image et de la deuxième image respectivement pour obtenir une première caractéristique locale, une deuxième caractéristique locale, une première caractéristique d'ordre élevé et une deuxième caractéristique d'ordre élevé, la première caractéristique locale et la deuxième caractéristique locale comprenant des vecteurs de caractéristiques locales correspondant respectivement à des points clés d'un corps humain, dans lequel la première caractéristique locale et la première caractéristique d'ordre élevé sont extraites de la première image, et la deuxième caractéristique locale et la deuxième caractéristique d'ordre élevé sont extraites de la deuxième image ;
S103 : la réalisation d'un alignement de caractéristiques sur la première caractéristique locale et la deuxième caractéristique locale pour obtenir une première caractéristique fusionnée et une deuxième caractéristique fusionnée ;
S104 : la réalisation d'un alignement de caractéristiques sur la première caractéristique d'ordre élevé et la deuxième caractéristique d'ordre élevé pour obtenir une première caractéristique fusionnée d'ordre élevé et une deuxième caractéristique fusionnée d'ordre élevé ; et
S105 : la détermination, sur la base de la première caractéristique fusionnée, de la deuxième caractéristique fusionnée, de la première caractéristique fusionnée d'ordre élevé et de la deuxième caractéristique fusionnée d'ordre élevé, si la première image et la deuxième image contiennent un même piéton ;
dans lequel l'extraction de caractéristiques de la première image et de la deuxième image respectivement pour obtenir une première caractéristique locale, une deuxième caractéristique locale, une première caractéristique d'ordre élevé et une deuxième caractéristique d'ordre élevé (S102) comprend :
l'extraction de caractéristiques locales du corps humain de la première image et de la deuxième image respectivement pour obtenir les premières caractéristiques locales et les deuxièmes caractéristiques locales ; et
la réalisation d'une agrégation de caractéristiques sur les premières caractéristiques locales pour obtenir la première caractéristique d'ordre élevé, et la réalisation d'une agrégation de caractéristiques sur les deuxièmes caractéristiques locales pour obtenir la deuxième caractéristique d'ordre élevé ;
dans lequel la réalisation d'un alignement de caractéristiques sur la première caractéristique locale et la deuxième caractéristique locale pour obtenir une première caractéristique fusionnée et une deuxième caractéristique fusionnée (S103) comprend :
S501 : le calcul d'une similarité de caractéristiques locales entre la première caractéristique locale et la deuxième caractéristique locale ;
S502 : la détermination d'une première caractéristique appariée de la deuxième caractéristique locale dans la première caractéristique locale en fonction de la deuxième caractéristique locale et de la similarité de caractéristiques locales ;
S503 : la détermination d'une deuxième caractéristique appariée de la première caractéristique locale dans la deuxième caractéristique locale en fonction de la première caractéristique locale et de la similarité de caractéristiques locales ; et
S504 : la réalisation d'une extraction de caractéristiques sur la première caractéristique appariée pour obtenir la première caractéristique fusionnée, et la réalisation d'une extraction de caractéristiques sur la deuxième caractéristique appariée pour obtenir la deuxième caractéristique fusionnée ;
dans lequel :
plus de deux points-clés du corps humain sont contenus ;
la réalisation d'une agrégation de caractéristiques sur les caractéristiques locales pour obtenir les caractéristiques d'ordre élevé comprend :
S301 : en fonction du vecteur de caractéristiques locales correspondant à chaque point-clé du corps humain, l'apprentissage et la détermination d'un premier paramètre, d'un deuxième paramètre et d'un troisième paramètre correspondant à la caractéristique locale ;
S302 : la génération d'une requête, d'une clé et d'une valeur correspondant à chaque vecteur de caractéristiques locales en fonction du premier paramètre, du deuxième paramètre et du troisième paramètre ;
S303 : la détermination d'un coefficient de pondération entre chaque paire de vecteurs de caractéristiques locales sur la base de la requête et de la clé ;
S304 : pour tout vecteur de caractéristiques locales, la détermination d'un coefficient d'ajustement en fonction d'une relation entre le vecteur de caractéristiques locales et chacun d'autres vecteurs de caractéristiques locales ;
S305 : l'obtention d'une caractéristique d'agrégation correspondant à la caractéristique locale en fonction du coefficient de pondération, du coefficient d'ajustement et de la valeur ; et
S306 : la détermination des caractéristiques d'ordre élevé en fonction des caractéristiques d'agrégation correspondant aux caractéristiques locales ;
les caractéristiques locales comprenant la première caractéristique locale et la deuxième caractéristique locale, et les caractéristiques d'ordre élevé comprenant la première caractéristique d'ordre élevé et la deuxième caractéristique d'ordre élevé ;
dans lequel la détermination d'une première caractéristique appariée de la deuxième caractéristique locale dans la première caractéristique locale en fonction de la deuxième caractéristique locale et de la similarité de caractéristiques locales (S502) comprend : le calcul d'un premier produit de la similarité de caractéristiques locales et de la deuxième caractéristique locale ; et la détermination d'une somme du premier produit et de la première caractéristique locale comme première caractéristique appariée ;
la détermination d'une deuxième caractéristique appariée de la première caractéristique locale dans la deuxième caractéristique locale en fonction de la première caractéristique locale et de la similarité de caractéristiques locales (S503) comprend : la transposition de la similarité de caractéristiques locales pour obtenir une similarité de caractéristiques locales transposée ; le calcul d'un deuxième produit de la similarité de caractéristiques locales transposée et de la première caractéristique locale ; et la détermination d'une somme du deuxième produit et de la deuxième caractéristique locale comme deuxième caractéristique appariée ;
dans lequel la réalisation d'un alignement de caractéristiques sur la première caractéristique d'ordre élevé et la deuxième caractéristique d'ordre élevé pour obtenir une première caractéristique fusionnée d'ordre élevé et une deuxième caractéristique fusionnée d'ordre élevé (S104) comprend :
S701 : le calcul d'une similarité de caractéristiques d'ordre élevé entre la première caractéristique d'ordre élevé et la deuxième caractéristique d'ordre élevé ;
S702 : la détermination d'une première caractéristique appariée d'ordre élevé de la deuxième caractéristique d'ordre élevé dans la première caractéristique d'ordre élevé en fonction de la deuxième caractéristique d'ordre élevé et de la similarité de caractéristiques d'ordre élevé ;
S703 : la détermination d'une deuxième caractéristique appariée d'ordre élevé de la première caractéristique d'ordre élevé dans la deuxième caractéristique d'ordre élevé en fonction de la première caractéristique d'ordre élevé et de la similarité de caractéristiques d'ordre élevé ; et
S704 : la réalisation d'une extraction de caractéristiques sur la première caractéristique appariée d'ordre élevé pour obtenir la première caractéristique fusionnée d'ordre élevé, et la réalisation d'une extraction de caractéristiques sur la deuxième caractéristique appariée d'ordre élevé pour obtenir la deuxième caractéristique fusionnée d'ordre élevé ;
dans lequel la détermination, sur la base de la première caractéristique fusionnée, de la deuxième caractéristique fusionnée, de la première caractéristique fusionnée d'ordre élevé et de la deuxième caractéristique fusionnée d'ordre élevé, si la première image et la deuxième image contiennent un même piéton (S105) comprend :
S201 : l'épissage de la première caractéristique fusionnée et de la première caractéristique fusionnée d'ordre élevé pour obtenir une première caractéristique épissée ;
S202 : l'épissage de la deuxième caractéristique fusionnée et de la deuxième caractéristique fusionnée d'ordre élevé pour obtenir une deuxième caractéristique épissée ; et
S203 : le calcul d'une valeur de perte de contraste entre la première caractéristique épissée et la deuxième caractéristique épissée, et la détermination si la première image et la deuxième image contiennent le même piéton en fonction de la valeur de perte de contraste.

2. Appareil d'appariement de piétons configuré pour mettre en œuvre les étapes du procédé selon la revendication 1, **caractérisé en ce qu'**il comprend :
un module d'acquisition (1001) configuré pour acquérir une première image et une deuxième image ;
un module d'extraction de caractéristiques (1002) configuré pour extraire des caractéristiques de la première image et de la deuxième image respectivement pour obtenir une première caractéristique locale, une deuxième caractéristique locale, une première caractéristique d'ordre élevé et une deuxième caractéristique d'ordre élevé, la première caractéristique locale et la deuxième caractéristique locale comprenant des vecteurs de caractéristiques locales correspondant respectivement à des points clés d'un corps humain ;
un premier module d'alignement de caractéristiques (1003) configuré pour effectuer un alignement de caractéristiques sur la première caractéristique locale et la deuxième caractéristique locale pour obtenir une première caractéristique fusionnée et une deuxième caractéristique fusionnée ;
un deuxième module d'alignement de caractéristiques (1004) configuré pour effectuer un alignement de caractéristiques sur la première caractéristique d'ordre élevé et la deuxième caractéristique d'ordre élevé pour obtenir une première caractéristique fusionnée d'ordre élevé et une deuxième caractéristique fusionnée d'ordre élevé ; et
un module d'appariement (1005) configuré pour déterminer, sur la base de la première caractéristique fusionnée, de la deuxième caractéristique fusionnée, de la première caractéristique fusionnée d'ordre élevé et de la deuxième caractéristique fusionnée d'ordre élevé, si la première image et la deuxième image contiennent un même piéton.

3. Dispositif électronique, comprenant une mémoire (1202), un processeur (1201) et un programme informatique (1203) stocké dans la mémoire (1202) et exécutable sur le processeur (1201), **caractérisé en ce que**, lors de l'exécution du programme informatique (1203), le processeur (1201) met en œuvre les étapes du procédé selon la revendication 1.

4. Support de stockage lisible par ordinateur stockant un programme informatique, **caractérisé en ce que**, lorsqu'il est exécuté par un processeur, le programme informatique met en œuvre les étapes du procédé selon la revendication 1.
